# EUROPEAN PATENT APPLICATION

(11) **EP 4 371 635 A1**
(43) Date of publication of application: **22.05.2024**
(21) Application number: 23202694.8
(22) Date of filing: 10.10.2023
(51) Int. Cl.: A63F 13/212, A63F 13/79

(54) **APPARATUS, SYSTEMS AND METHODS FOR INTERACTIVE SESSION NOTIFICATION**

(30) Priority: 03.11.2022 GB 202216344
(71) Applicant: Sony Interactive Entertainment Inc., Tokyo 108-0075 (JP)
(72) Inventor: MONTI, MARIA, London W1F 7LP (GB); COCKRAM, Philip, London W1F 7LP (GB)
(74) Representative: D Young & Co LLP

(57) **Abstract**

A data processing apparatus comprises: receiving circuitry to receive game state information and associated user data for a plurality of previous interactive sessions of an interactive gaming application, the plurality of previous interactive sessions associated with a plurality of users, wherein for each previous interactive session, the user data is indicative of one or more properties for a given user during the previous interactive session and the game state information is indicative of one or more in-game properties during the previous interactive session; analysis circuitry to: generate user emotion data indicative of one or more user emotion categories in dependence upon the user data for the plurality of previous interactive sessions; detect a correspondence between a set of one or more in-game properties and a given user emotion category for at least a threshold number of interactive sessions; and generate a notification element comprising notification data indicative of the set of one or more in-game properties; and storage circuitry to store the notification element.

## Description

### Field of the Disclosure

The present disclosure relates to the field of processing data, and more particularly to processing video game data. In particular, the present disclosure relates to apparatus, systems and methods for obtaining and storing notification elements for an interactive gaming application based on analysis of previous interactive sessions for interactive gaming applications.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

An interactive gaming application can be executed to provide audio and video output for users during interactive sessions. During interactive sessions, users can experience a range of emotions such happiness to sadness, fear to surprise and stress to joy depending on the content being output as well preferences of the different users.

Generally, it is desirable to provide an interactive session for an interactive gaming application that can reduce a likelihood and/or a strength of negative user emotions experienced by users. Strong negative user emotions can generally be considered to have high arousal and negative valence, such as panic, frustration, shock anger and stress, for example, and can be detrimental to users as well as a popularity of an interactive gaming application. Content developers may in some cases include messages and other similar indicators to indicate upcoming scenarios during an interactive session. However, such techniques can add to the development time of such content and may not always be consistent with the experience of users when participating in an interactive session.

There is a need to improve interactions with interactive gaming applications.

It is in this context that the present disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram illustrating a data processing apparatus;
Figure 3 is a schematic diagram illustrating a system;
Figure 4 is a schematic diagram illustrating an example of user emotion data for two interactive sessions;
Figures 5 and 6 are schematic flowcharts illustrating example methods for identifying a set of in-game properties to be used for generating a notification element;
Figure 7 is a schematic flowchart illustrating a method for generating and storing a notification element;
Figure 8 is a schematic diagram illustrating another system; and
Figure 9 is a schematic flowchart illustrating a method for generating a notification for output to a user.

Embodiments of the invention will now be described, by way of example only, with reference to the accompanying drawings, in which:

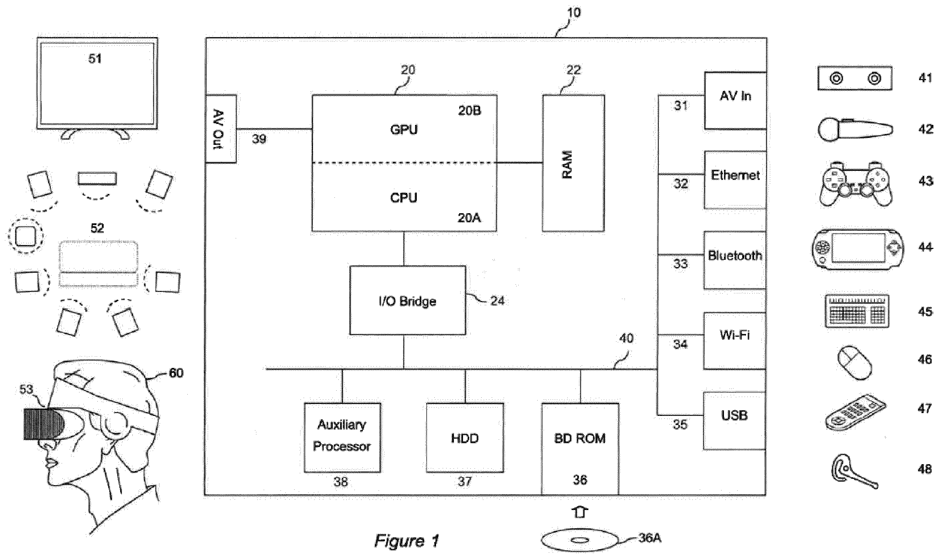

Figure 1 schematically illustrates an example entertainment device such as the Sony^{®} PlayStation 4^{®} entertainment device. A system unit 10 is provided, with various peripheral devices connectable to the system unit.

The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ^{®} drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with peripheral devices as appropriate via an audio/visual input port 31, an Ethernet ^{®} port 32, a Bluetooth ^{®} wireless link 33, a Wi-Fi ^{®} wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ^{®}; wand-style videogame controllers 42 such as the PlayStation Move ^{®} and conventional handheld videogame controllers 43 such as the DualShock 4 ^{®} or DualSense ^{®}; portable entertainment devices 44 such as the PlayStation Portable ^{®} and PlayStation Vita ^{®}; a keyboard 45 and/or a mouse 46; a media controller 47, for example in the form of a remote control; and a headset 48. Other peripheral devices may similarly be considered such as a printer, or a 3D printer (not shown).

The GPU 20B, optionally in conjunction with the CPU 20A, processes data and generates video images (image data) and optionally audio for output via the AV output 39. Optionally, the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60.

In operation, the entertainment device defaults to an operating system such as a variant of FreeBSD 9.0. The operating system may run on the CPU 20A, the auxiliary processor 38, or a mixture of the two. The operating system provides the user with a graphical user interface such as the PlayStation Dynamic Menu. The menu allows the user to access operating system features and to select games and optionally other content.

Figure 1 therefore provides an example of an entertainment device suitable for performing processing for executing an instance of an interactive gaming application and generating images and audio for output to a user. The entrainment device may for example generate images for display by a display device such as the television 51 and/or the head mounted display unit 53.

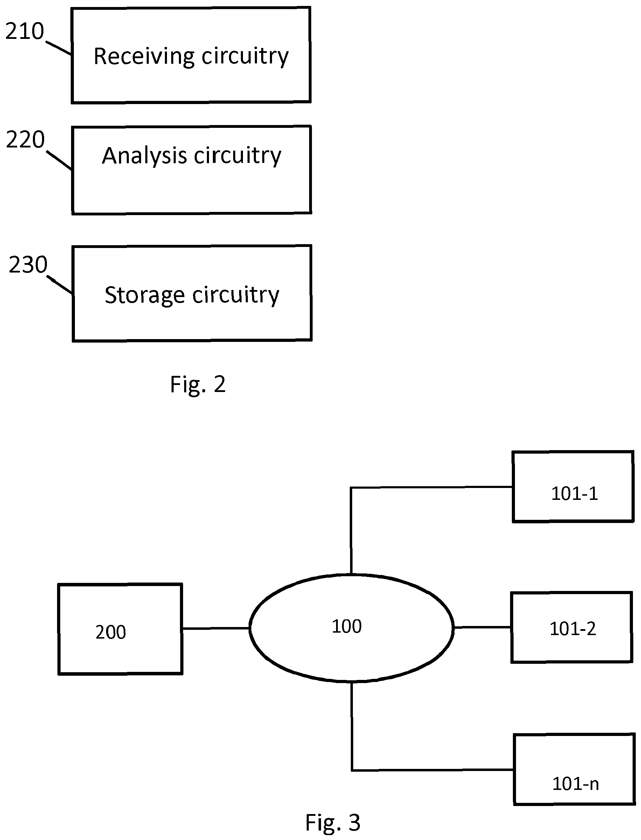

Figure 2 schematically illustrates a data processing apparatus in accordance with embodiments of the disclosure.

The data processing apparatus 200 comprises:
receiving circuitry 210 to receive game state information and associated user data for a plurality of previous interactive sessions of an interactive gaming application, the plurality of previous interactive sessions associated with a plurality of users, wherein for each previous interactive session, the user data is indicative of one or more properties for a given user during the previous interactive session and the game state information is indicative of one or more in-game properties during the previous interactive session;
analysis circuitry 220 to: generate user emotion data indicative of one or more user emotion categories in dependence upon the user data for the plurality of previous interactive sessions; detect a correspondence between a set of one or more in-game properties and a given user emotion category for at least a threshold number of interactive sessions; and generate a notification element comprising notification data indicative of the set of one or more in-game properties; and
storage circuitry 230 to store the notification element.

In some embodiments of the disclosure, the data processing apparatus 200 may be provided as part of an entertainment device such as that described with reference to Figure 1. More generally, the data processing apparatus 200 may be provided as part of a game console, smartphone device, laptop or a general purpose computing device.

In some embodiments of the disclosure, the data processing apparatus 200 may be provided as part of a server apparatus. In some examples, the server apparatus may be a server provided for hosting interactive gaming sessions or a game management server.

Figure 3 schematically illustrates an example of a system comprising the data processing apparatus 200. The system comprises the data processing apparatus 200 which communicates with the client devices 101-1, 101-2 ... 101-n via the network 100. Whilst this example shows three client devices, the number of client devices is not particularly limited and there may be any suitable number of client devices (n may be any suitable value).

In example of Figure 3, the data processing apparatus 200 may be a server apparatus. The data processing apparatus 200 may thus receive data for game sessions from the client devices 101-1, 101-2, 101-n via the network 100. The client devices may be devices such as the entertainment device described with reference to Figure 1, or other similar devices having display functionality such as a smartphone or tablet device or a general purpose computing device connected to a display unit. Hence, images and audio for an instance of the interactive gaming application can be output to a user via their client devices and for each interactive session, the game state information and user data can be received by the data processing apparatus 200. The game state data and user data for a previous interactive session may be provided to the apparatus 200 during a session, e.g. by streaming or at fixed time intervals, or may be provided to the apparatus 200 after ending the session.

Hence, in some embodiments of the disclosure, the data processing apparatus 200 may be provided as part of a server and may be operable to receive data for a plurality of previous interactive sessions in which each previous interactive sessions was hosted by an entertainment device of a user. For example, respective users may each participate in their own interactive game session using their own entertainment devices. During the interactive game session or upon ending the interactive game session, the game state information and associated user data for that session can be output to another device for storage and then subsequently acquired by the receiving circuitry 210. In some cases, the data processing apparatus 200 may comprise suitable storage for storing the data for the interactive sessions for analysis by the analysis circuitry 220.

Referring again to Figure 2, more generally the data processing apparatus 200 is operable to receive data for a plurality of previous interactive sessions for a given interactive gaming application. For example, the interactive gaming application may be single player or multiplayer video game of a type such as a first-person shooter, role playing or action-adventure game. The type of video game is not particularly limited.

The data received for each previous interactive session comprises at least game state information and user data obtained for a respective user during the interactive session.

For a given previous interactive session, the game state information may be generated by a user's entertainment device (such as that described with reference to Figure 1) during the interactive session. Alternatively or in addition, for a given previous interactive session the game state information may be generated by a gaming server during the interactive session. Hence, the game state information may be generated by any suitable device that executes an instance of the interactive gaming application. Alternatively or in addition, one or more processing operations may have been performed with respect to the game state information by the source device (e.g. entertainment device) prior to being output for analysis by the data processing apparatus 200. For example, the game state information may be processed so as to include metadata indicative of in-game properties and timings associated with those in-game properties.

The game state information for a previous interactive session is indicative of one or more in-game properties during the interactive session. For example, the game state information may indicate one or more of: an in-game scene; an in-game location; an in-game object; an in-game sound; an in-game time; and an in-game event.

The user data for a previous interactive session is indicative of one or more user properties during the interactive session. As explained in more detail later, the user data may comprise user input data associated with a user input device that is used by a user (such as a handheld controller or a head-mountable display unit) for progressing the game and/or user biometric data obtained by one or more sensors that monitor physical properties of a user.

Therefore, the game state information and the user data, when considered together, provide an indication of the in-game properties and also the associated user's properties at the time of those in-game properties for the previous interactive session.

The game state information and associated user data can be received for a number of previous interactive sessions (which may potentially be a large number of the order of tens, hundreds or even thousands). The receiving circuitry is operable to receive a plurality of previous interactive sessions of an interactive gaming application (more specifically, the data for those interactive sessions), and the plurality of previous interactive sessions are associated with a plurality of users. In some examples, each of the plurality of previous interactive sessions may be associated with a different user. Alternatively, in some examples two or more of the previous interactive sessions may be associated with a same user.

More generally, data for a corpus of previous interactive sessions can be received by the data processing apparatus 200 and analysed using the techniques discussed below to generate and store one or more notification elements each comprising notification data indicative of one or more sets of in-game properties that are identified, from the corpus, as frequently (relative to a threshold) corresponding to a given category of user emotion.

Analysis of the data for the previous interactive sessions is performed by the analysis circuitry 220. Specifically, analysis of the user data can be performed for each of the previous interactive sessions to generate emotion data indicative of one or more user emotion categories associated with the user properties during the previous sessions. Various known user emotion categories can be used for this purpose. In addition, analysis of the game state information can be performed to detect a set of one or more in-game properties and the set of one or more in-game properties can be associated with the emotion category.

For example, through analysis of the data for the previous interactive sessions, a correspondence in a respective session between a particular in-game property (e.g. an in-game location), and/or a correspondence between a combination of particular in-game properties (a plurality of in-game locations) (e.g. an in-game location and a certain in-game object), and a respective emotion category may be identified. Hence, at least one set of one or more respective properties and a corresponding user emotion category can be identified through analysis of the data for a respective session. Then, for at least one set of the one or more in-game properties in the respective session, correspondence between the set of one or more in-game properties and the user emotion category in the other previous interactive sessions is detectable, and a total number of interactive sessions for which the correspondence between the set and the same user emotion category is detected can be evaluated relative to a threshold. In this way, a set of one or more in-game properties that frequently results in a user emotion category can be identified and the data processing apparatus 200 is operable to store a notification element for indicating the set of one or more in-game properties.

In some embodiments of the disclosure, the correspondence may be detected for a set comprising any from the list consisting of: a set comprising two in-game properties; a set comprising three in-game properties; a set comprising four in-game properties; and a set comprising five in-game properties and so on. For example, a set comprising two in-game properties may comprise an in-game location and a specific in-game character. In this way, a notification element can be generated specifically for the combination of the in-game location and a specific in-game character, thereby providing a more reliable notification scheme that can account for combinations of in-game properties corresponding to given user emotions.

The data processing apparatus 200 can create and store notification elements to indicate in-game properties that have been identified from a corpus of previous game sessions as frequently resulting in a given emotion category. The notification elements can subsequently be used during other future interactive sessions for the interactive gaming application to provide one or more notifications to a user during that session. Possible uses of the notification elements are discussed in more detail later. More generally, notification elements can be automatically generated for one or more sets of in-game properties and used to generate a notification for output during future gaming sessions to provide one or more notifications to users. The notifications can thus be obtained from analysis of previous interactive sessions and users' behaviours, and can reliably identify in-game properties (and/or combinations of in-game properties) for which notification may be relevant. This is in contrast to other techniques in which developers may hardcode notifications into gaming applications based on what is considered to be notification worthy to the developer at the time of development.

As explained above, the one or more user emotion categories may correspond to any suitable known categories of user emotion. In some embodiments of the disclosure, the analysis circuitry is configured to generate user emotion data indicative of one or more user emotion categories in dependence upon the user data for the plurality of previous interactive sessions, in which the one or more user emotion categories each correspond to a different negative user emotion. Examples of negative types of user emotion include: fear; anger, frustration and stress. In this way, a correspondence between a set of one or more in-game properties and a given user emotion category relating to a negative user emotion can be detected for a threshold number of sessions, and the notification element generated accordingly. The notification element can thus be used during future sessions to notify users in respect of the set of one or more in-game properties that have been identified as causing a negative user emotion and this can improve the user's experience and also performance. For example, the user can thus be prepared for such in-game properties and at least one of a likelihood of experiencing a negative user emotion and an intensity of the negative user emotion can be reduced for the user.

The user data indicates properties associated with the user throughout the interactive session and at various points (times) during the session the analysis circuitry may determine that the user's properties are categorised as a user emotion category relating to a negative type of user emotion. In particular, the analysis circuitry may determine that the user's properties for a temporal segment of the interactive session are categorised as a user emotion category that is one or more of: a fear category; an anger category; a frustration category and a stress category. Hence, the user emotion data may indicate one or more user emotion categories and the points in the interactive session associated with the one or more user emotion categories. Techniques for categorising user emotions based on the user data are discussed in more detail later.

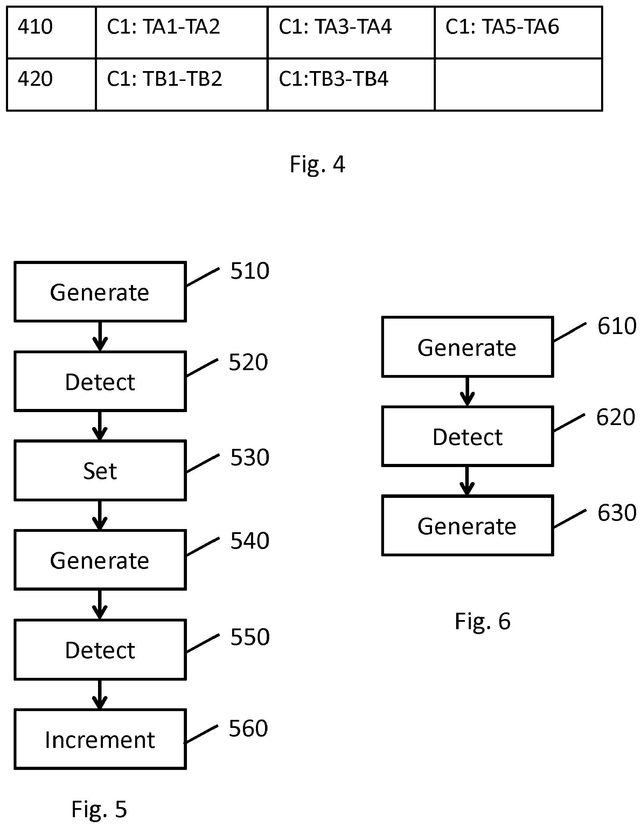

Figure 4 schematically illustrates an example of the user emotion data generated for two previous interactive sessions 410 and 420. In the schematic example shown, a single emotion category C1 is used. For example, C1 may be an emotion category corresponding to a stress category. In the example shown, the generated user emotion data indicates that for the time periods TA1-TA2, TA3-TA4 and TA5-TA6 the user data for the user associated with the session 410 has been categorised as C1. For example, the session 410 may correspond to a session with a play duration of X minutes (e.g. X = 30 minutes) and TA1-TA2 may for example represent a time period from the fifth minute to the sixth minute, TA3-TA4 may represent a time period from the tenth minute to the fifteenth minute, and TA5-TA6 may represent a time period from the twenty fifth minute to the twenty eighth minute (of course whilst the example timings refer to whole minutes, the categorisation is responsive to changes in the properties of the user and the time periods TA1-TA2, TA3-TA4 and TA5-TA6 can begin and end at any suitable time). Similarly, the generated user emotion data indicates that for the time periods TB1-TB2 and TB3-TB4 the user data for the user associated with the session 420 has been categorised as C1 (the final column for session 420 is empty indicating that in this example the user data has been categorised as C1 for just the two time periods TB1-TB2 and TB3-TB4).

For example, the session 420 may correspond to a session with a play duration of Y minutes, where Y is different to X (e.g. Y = 40 minutes). The sessions 410 and 420 may relate to a same portion of a video game, such as a same in-game level, however, one user may have ended their session part way through the level and/or one user may have reached and end of the level faster than another user, thus resulting in the different play durations. Alternatively, the sessions 410 and 420, whilst being respective sessions for a same interactive gaming application, may correspond to different levels or different portions of the video game or partially overlapping portions of the video game. Hence more generally, whilst the sessions 410 and 420 may not relate to a same portion (or exactly same portion) of a video game, the respective portions TA1-TA2, TA3-TA4 and TA5-TA6 for the first session 410 which are associated with the user emotion category C1 can be identified and the game state information associated with those portions also identified. Similarly, the respective portions TB1-TB2 and TB3-TB4 for the second session 420 which are associated with the user emotion category C1 can be identified and the game state information associated with those portions also identified. The game state information for each of the respective portions corresponding to the category C1 can be analysed and a degree of commonality between the game state information for the respective portions can be evaluated. For example, it may be that both the portion TA1-TA2 and TB3-TB4 have game state information relating to a same location in a game world for the video game. Alternatively or in addition, it may be that both the portion TA1-TA2 and TB3-TB4 have game state information relating to a same game object (e.g. a same game character or game item). Alternatively or in addition, it may be that both the portion TA1-TA2 and TB3-TB4 have game state information relating to a same game object and a same location.

Therefore, in some examples the analysis circuitry can be configured to generate user emotion data for each session (e.g. sessions 410 and 420) and detect a number of respective sessions for which a same set of one or more in-game properties is associated with the emotion category C1. In particular, in response to analysing the first session 410 and identifying the portion TA1-TA2, the game state information for that portion can be set as first candidate game state information (being a candidate for which a notification element may be created if detected in a threshold number of sessions) and in response to detection of the same game state information being associated with the category C1 in another session a count associated with the first candidate game state information can be incremented. Similarly, the game state information for the portion TA3-TA4 (if different from that of the portion TA1-TA2) can be set as second candidate game state information and in response to detection of the same game state information being associated with the category C1 in another session a count associated with the second candidate game state information can be incremented.

As indicated above, in some examples the portions TA1-TA2 and TA3-TA4 could relate to the same game state information (e.g. a same object). Hence, the game state information for the portion TA1-TA2 can be set as first candidate game state and the count associated with the first candidate game state can optionally be incremented in response to the portion TA3-TA4 having the same game state information. This can potentially result in the count being incremented two or more times in response to the analysis of a single interactive session. This may be problematic in that a relatively small number of users that are more emotionally sensitive than others can overly contribute to the count. Hence in some examples, a condition may be imposed that restricts each session to being able to increment a counter associated with a candidate game state information only once. More generally, a condition may be imposed that restricts each session to being able to increment a counter associated with a candidate game state information only a predetermined number of times (e.g. a number in the range 1 to 5).

In the above discussion the game state information for the portion TA1-TA2 can be set as first candidate game state information. However, in some examples the game state information for the portion TA1-TA2 may be used to obtain a plurality of candidate sets of game state information for which the above technique can be performed. In particular, in the case of the game state information for the portion TA1-TA2 comprising a number of in-game properties such as P1, P2 and P3, it is possible to create a candidate using each possible combination so that the following candidates can be created: P1; P2; P3; P1 AND P2; P1 AND P3; P2 and P3; P1 AND P2 AND P3. Count information can be obtained for each of the candidates and any of the candidates may be used to generate a notification element if the count information satisfies the threshold condition.

Hence the above discussion with regards to Figure 4 provides an example of detecting a correspondence between a set of one or more in-game properties and a given user emotion category and detecting whether the correspondence is present for at least a threshold number of interactive sessions. The threshold may be set in any suitable way, as discussed in more detail later.

Figure 5 is a schematic flowchart illustrating example processing operations that may be performed by the analysis circuitry 210 as part of detecting a correspondence between a set of one or more in-game properties and a given user emotion category for at least a threshold number of interactive sessions. The processing operations may comprise:
generating (at a step 510) first user emotion data indicative of one or more user emotion categories in dependence upon the user data for a first interactive session;
detecting, (at a step 520), for the first interactive session, a set of one or more in-game properties associated with a given user emotion category;
setting (at a step 530) the set of one or more in-game properties as a first candidate set and associating a count value with the first candidate set;
generating (at a step 540) second user emotion data indicative of one or more user emotion categories in dependence upon the user data for a second interactive session;
detecting (at a step 550) for the second interactive session, the set of one or more in-game properties being associated with the given user emotion category; and
incrementing (at a step 560) the count value associated with the first candidate set.

The processing illustrated in Figure 5 can be repeated for each of the previous interactive sessions for which the data is acquired by the data processing apparatus 200 and an assessment of the resulting count value and a threshold can be used as a condition for determining whether to trigger the creation of a notification element for the first candidate set.

Of course, whilst Figure 5 shows the first user emotion data and the second user emotion data being generated at the steps 510 and 540, in some examples the user emotion data may instead be initially be generated for each of the interactive sessions at the step 510.

More generally, Figure 6 is another schematic flowchart illustrating example processing operations that may be performed by the analysis circuitry 210. The processing operations may comprise:
generating (at a step 610) user emotion data indicative of one or more user emotion categories in dependence upon the user data for the plurality of previous interactive sessions;
detecting (at a step 620), for a previous interactive session of the plurality of previous interactive sessions, a respective set of one or more in-game properties associated with at least one temporal segment of the previous interactive session that has been associated with a given user emotion category; and
generating (at a step 630) count information indicative of a total number of the plurality of previous interactive sessions for which the respective set of one or more in-game properties is detected to be associated with the given user emotion category.

Hence, count information can be generated for a respective set of one or more in-game properties to indicate a total number of the plurality of previous interactive sessions for which the respective set of one or more in-game properties is associated with a same user emotion category (e.g. a user emotion category corresponding to user stress). The count information can be compared with one or more thresholds for deciding whether to trigger processing for creation of a notification element for the respective set of one or more in-game properties.

The one or more thresholds for triggering processing for creation of a notification element may be set in any suitable way. The threshold is generally set so as to allow creation of notification elements for respective sets of one or more in-game properties that have been consistently identified as corresponding to a given user emotion category for the corpus of previous interactive sessions whilst ensuring that sets of one or more in-game properties that do not correspond to, or rarely correspond to, the given user emotion category do not trigger creation of notification elements.

In some embodiments of the disclosure, the analysis circuitry is configured to detect when a set of one or more in-game properties corresponds to a given user emotion category for at least a threshold number of interactive sessions and the storage circuitry is configured to store a notification element comprising data indicative of the set of one or more in-game properties in response to the detection, in which the threshold number of interactive sessions is one of: a predetermined number of interactive sessions; a predetermined percentage of the number of previous interactive sessions.

For example, the threshold number of interactive sessions may be set to a predetermined value N that is set in advance such that when a same set of one or more in-game properties corresponds to a given user emotion category for at least N of the plurality of previous interactive sessions for which data is received, the processing for generating a notification element for the set of one or more in-game properties is triggered. N may for example be a value in the range 2 to 100. In particular, by setting N to a value of 2, the analysis circuitry may generate the notification element in response to at least two of the previous interactive sessions having a correspondence between a given user emotion category and a same set of in-game properties. This may for example be particularly suitable when performing the above mentioned analysis techniques for a relatively small number of previous interactive sessions of the interactive gaming application. However, when performing the above mentioned analysis techniques for a larger number of previous interactive sessions of the interactive gaming application, it may be desirable to set N to a larger value whilst keeping N less than the total number of previous interactive sessions being analysed. By varying the value of N it is possible to control the number of notification elements generated, and by specifically increasing the value of N it is possible to restrict notification element generation to the most frequently observed "emotion category - in-game properties" correspondences in the previous interactive sessions.

In some examples, the threshold number of interactive sessions may be set to a predetermined percentage (predetermined proportion) of the number of previous interactive sessions. For example, the threshold number Y of interactive sessions may be set to correspond to a value in the range of 5%-100% of the total number of previous interactive sessions. Again, by varying the value of Y it is possible to control the number of notification elements generated, and by increasing the value of Y it is possible to restrict notification element generation to the most frequently observed correspondences in the previous interactive sessions.

In some examples, Y may be set to a value in the range of 30%-90% of the total number of previous interactive sessions. In some examples, Y may be set to a value that corresponds to 50% of the total number of previous interactive sessions. For example, in the case in which data is received by the receiving circuitry 210 for a total of 1000 previous interactive sessions, the analysis circuitry may be configured to detect whether there is a correspondence between a set of one or more in-game properties and a given user emotion category for at least 50% (e.g. 500 in this example) of the previous interactive sessions, and if so, generate a notification element indicative of the set of one or more in-game properties. In this way, one or more notification elements can be generated for one or more sets of in-game properties that were associated with a given user emotion category for at least half of the analysed interactive sessions.

Hence, the analysis circuitry can generate at least one notification element comprising data indicative of one or more in-game properties and the storage circuitry is operable to store notification elements generated by the analysis circuitry.

### User Emotion Data and User Data

Examples will now be discussed of possible user emotion categories identified from the user data. In particular, examples will be discussed with respect to the user data for a single previous interactive session, and it will be appreciated that the analysis circuitry can similarly perform the techniques for each of the previous interactive sessions.

The user data indicates properties of the user throughout the interactive session. In some embodiments of the disclosure, the user data for at least some of the previous interactive sessions comprises at least one of user input data associated with a user input device and user biometric data associated with one or more sensors for monitoring one or more physical user properties. The user input device may for example be a handheld controller and/or an HMD.

Hence in some embodiments of the disclosure, the analysis circuitry is configured to generate user emotion data indicative of one or more user emotion categories in dependence upon user input data associated with a user input device.

Through analysis of one or more properties of the user input data associated with an input device during an interactive session for controlling one or more in-game operations (e.g. operations of an in-game character), one or more user emotion categories can be determined for categorising the user's emotional state. A property such as button press data and/or control stick data and/or position data and/or orientation data associated with the user input device can be analysed and may be indicative of a given user emotion category. For example, during a stressful period of gameplay, such as when encountering a boss character, one or more properties of the user input data may indicate that the user is currently stressed. A user may repeatedly press a given button of a game controller with a high press rate when experiencing stress, but may not do so, or do so with a lower press rate, when they are calm. More generally, a user input rate associated with a game controller (e.g. total number of inputs per unit time for the controller) may be indicative of whether the user is experiencing stress and optionally an intensity (degree) of the stress emotion. Similarly a detection of fast and repeated use of an input at a time when the input does not result in an in-game operation can be used to infer an emotion category corresponding to anger and/or frustration.

Similarly, a user may shake a game controller when experiencing stress, which can be indicated through position and/or orientation data generated by one or more inertial sensors of the controller and/or image tracking of the controller. A user may perform certain gestures with a game controller when experiencing stress or at the end portion of a stressful experience, which can be indicated through position and/or orientation data from the controller. A user may jolt or knock a controller, which is detectable via the position and/orientation data, during moments of anger, frustration and stress.

More generally, the user input device may comprise one or more of a conventional videogame controller and a conventional HMD. Conventional videogame controllers are designed to capture actions of a user generated intentionally to command a videogame console. Such actions can be hand movements (pressing buttons, pulling triggers, pushing control sticks) on a handheld controller, and/or may incorporate gestures (such as pointing a controller or moving it in a predetermined pattern). Similarly, conventional HMDs may incorporate inertial measurement units for capturing actions such as head movement and whole-body movement (for example to control a character to duck under a virtual obstacle by moving the user's head down when wearing an HMD).

Therefore, through analysis of user input data associated with one or more conventional user input devices, one or more user emotion categories can be identified for portions of the interactive session. Whilst the above examples, refer to a stress category of user emotion, other emotion categories may similarly be used such as anger, frustration and/or fear.

In some embodiments of the disclosure, the analysis circuitry is configured to generate user emotion data indicative of one or more user emotion categories in dependence upon user biometric data associated with one or more sensors for monitoring one or more physical user properties. Various physical properties may be indicated by the biometric data and used for determining one or more emotion categories for the user at different time periods during the interactive session.

Example sensors for monitoring one or more physical user properties may include: image sensors (e.g. one or more visible light cameras and/or one or more infrared cameras); audio sensors; heart rate sensors; electrodermal activity sensors and temperature sensors. Such sensors may be provided as part of an input device (e.g. controller and/or HMD) and/or as part of a fitness tracking device worn by a user (e.g. smartwatch) and/or mounted with respect to a user's display unit or game console (e.g. one or more cameras and microphones for capturing images and/or speech associated with the user).

During an interactive session, biometric data indicative of physical user properties can be obtained for a user using microphones, cameras, fitness tracking devices, mobile telephones, or the like, that are configured to communicate with entertainment device via wired or wireless communication methods such as Bluetooth ^{®}, USB, WiFi ^{®}, or the like. In embodiments of the disclosure, the user biometric data is indicative of one or more from the list consisting of: galvanic skin response; body temperature; heart rate; breathing rate; eye blink rate; metabolic rate; one or more properties of a face of the given user; one or more properties of a body pose of the given user; one or more properties of speech associated with the given user; gaze direction; and pupil dilation. For example, images may be captured using images sensors provided as part of an HMD, smartphone, handheld controller and/or camera associated with a game console. From such images, properties of the user's face, eyes and other body portions can be identified. For example, a facial expression, blinking rate, gaze direction, pupil dilation can be identified. Alternatively or in addition, audio associated with the user's real-world environment may be captured using one or more microphones provided as part of an HMD, smartphone, handheld controller and/or game console system. From such audio, properties of the user's speech such as a pitch, spoken words, and loudness can be identified. Other properties such as sweating, body temperature, heart rate and metabolic rate maybe indicated based on biometric data generated by one or more sensors worn by the user. In some examples, an infrared camera can be used to measure body temperature.

Techniques for categorising user emotions using biometric data for a user are generally known and are not discussed in detail. With regards to negative user emotions, properties such as elevated hart rate, breathing rate and sweating can be indicative of negative user emotions such as fear; anger, frustration and stress. However, such properties may also be related to physical exertion. In some examples, measurement of these properties in addition to measurement of average motion (e.g. using tracking data from a controller and/or HMD, and/or images captured of the user) may be used to distinguish when the user is experience one or more negative emotions. Similarly, facial expression can be particularly useful in identifying negative user emotion and may be used alone or in combination with any of the above properties. Any suitable face expression classification algorithm maybe used for determining an emotion category based on an image including a facial expression for a user. Gaze direction and patterns can similarly be used to infer an emotional category. Optionally, audio data may be analysed and detection of keywords may be used to detect moments of anger, fear, stress and frustration.

Hence more generally, various properties associated with the user during an interactive session can be indicated by the user input data and one or more of user input data and user biometric data can be analysed to determine one or more user emotion categories for the user at various time segments during the session.

### Notification Elements

The data processing apparatus 200 is operable to generate and store one or more notification elements according to the techniques discussed previously. A notification element comprises notification data indicative of at least a set of one or more in-game properties. The notification element can be provided to one or more game processing devices (e.g. the client devices 101-1, 101-2, 101-n) and used for providing a notification to a user. For example, the data processing apparatus 200 may output the notification element to a user's device prior to beginning a new session (or at the beginning of a new session), and a notification (e.g. video and/or audio notification) indicating the set of one or more in-game properties may be output to notify the user. In particular, in advance of starting a new session (or at the beginning of the new session), an initial notification image may be generated for display to a user to notify the user one or more in-game properties for which previous users experienced negative emotions. However, in some examples the notification element (in particular the set of in-game properties indicated by the notification element) may be used to provide a notification to a user during a session and at a time prior to the user encountering the set of in-game properties. This is discussed in more detail below.

In some examples, the data processing apparatus 200 is operable to generate and store a plurality of notification elements each indicative of a different set of one or more in-game properties. For example, a first notification element may indicate a given in-game location, a second notification element may indicate a given in-game object, and a third notification element may indicate a combination of another in-game object and another in-game location. Such notification elements can be provided to a game processing device and used to generate a notification image to notify the user of: the given in-game location; the given in-game object; and the combination of the another in-game object and another in-game location. The notification image can in some examples be displayed in advance of a game session. In this way, a user can be informed in advance that other users have experienced negative user emotions and informed of the in-game properties associated with those negative user emotions. The user can thus be prepared for such in-game properties and at least one of a likelihood of experiencing a negative user emotion and an intensity of the negative user emotion can be reduced for the user.

In particular, in the case of the notification elements relating to a stress category of user emotion, the notification elements can be used to notify the user of stressful in-game properties and thereby potentially alleviate user stress during the interactive session.

In a simplest case, a notification element comprises notification data indicative of a set of one or more in-game properties. A game processing device can thus receive the notification element and generate a notification for indicating the set of one or more in-game properties. For example, the game processing device may store a look-up table for associating a notification element with image data (e.g. a template image) to be used for generating an image notification. Alternatively or in addition, the look-up table may associate a notification element with audio data to be used for generating an audio notification and/or haptic data to be used for generating a haptic notification.

In some embodiments of the disclosure, a notification element may comprise notification data for generating one or more notifications for output. The notification data may comprise data for generating one or more of: an image notification; an audio notification; and a haptic notification. For example, the notification data may comprise image data for an image frame. The image frame may include a textual representation of the set of one or more in-game properties. For example, the set of one or more in-game properties may be arranged in a list within the image frame. Consequently, the notification element can be transmitted to a user's device (e.g. an entertainment device) and the notification data processed to generate the image frame for display to a user. The image frame may in some examples be a so-called warning image including a warning message such as "Warning, be prepared" followed by the set of in-game properties.

The notification data may comprise audio data and/or text data for an audio notification. The audio notification may comprise dialogue such as "Warning, be prepared" followed by an announcement of the set of in-game properties. The notification data may comprise audio data which is processed by the game processing device. Alternatively or in addition, the notification data may comprise text data which can be processed by the game processing deice using known text to speech algorithms to generate an audio output.

The notification data may comprise haptic data for generating a haptic interaction signal and controlling a haptic interface responsive to the haptic interaction signal to provide a haptic interaction with a user for notifying the user. For example, one or more haptic interfaces may be provided in a handheld controller and/or an HMD, and during a game session the notification element may be used to generate one or more haptic interaction signals. For example, a rumble of a controller and/or an HMD may be used to indicate a warning to the user of an upcoming set of game properties.

In some examples, the haptic notification may be provided as a first notification to the user and, in response to a confirmation input being detected by the user's entertainment device (e.g. a predetermined button being selected or a predetermined gesture being performed), one or more of the image notification and the audio notification can be output. In this way, a user can receive a haptic notification which indicates a warning to the user without specifying any in-game properties, and the user can select whether to be notified of the in-game properties. This may provide a less disruptive experience for some users who at some points in the session may either be satisfied with a general warning or may not want to know the details of the warning.

Hence the notification data may comprise one or more of image data, audio data and haptic data.

In some embodiments of the disclosure, a notification element comprises notification data which comprises data indicative of the given user emotion category. In this case, the notification data can be used to indicate both the set of one or more in-game properties and the given user emotion category. For example, an image notification and/or audio notification can be output to the user to indicate the set of one or more in-game properties and the given user emotion category. In particular, an image frame may in some examples include: a warning message; a textual representation of the set of in-game properties; and a textual representation of the given user emotion category. In some examples, the image frame may include a graphical indicator indicative of the given user emotion category. For example, a graphical indicator such as a graphical representation of a face conveying the emotion associated with the given user emotion category may be included. For example, in the case of the given user emotion category being a stress emotion category, an emoji (or other similar facial representation) such as a grimacing emoji or face with cold sweat emoji may be provided.

In some embodiments of the disclosure, a notification element comprises notification data indicative of the given user emotion category and an emotion intensity rating associated with the given user emotion category. In particular, an image frame may in some examples include: a warning message; a textual representation of the set of in-game properties; a textual representation of the given user emotion category; and a textual representation of an emotion intensity rating for the given user emotion category. In some examples, the emotion intensity rating may take the form of a binary indicator for indicating high intensity and low intensity. In other examples, the emotion intensity rating may take the form of a number between 1 and 10 (or similarly between 0 and 1, or 1 and 100), with larger values indicating a greater intensity and lower values indicating a lower intensity. In this way, the image and/or audio notification can indicate the given user emotion category and the intensity for that user emotion category. As explained below, the intensity rating for the user emotion category may be obtained by the analysis circuitry detecting a number of the previous sessions that correspond to a first intensity level for the given user emotion category and detecting a number of the previous sessions that correspond to a second intensity level for the given user emotion category.

In some embodiments of the disclosure, the analysis circuitry is configured to:
detect a correspondence between a set of one or more in-game properties and a given user emotion category for at least a threshold number of interactive sessions; and
generate a notification element comprising notification data indicative of the set of one or more in-game properties, and
detect a number of the previous interactive sessions corresponding to respective different intensity levels for the given user emotion category, and
the storage circuitry is configured to store the notification element to comprise notification data indicative of the given user emotion category and an emotion intensity rating associated with the given user emotion category, the emotion intensity rating being dependent upon the number of the previous interactive sessions corresponding to the respective different intensity levels for the given user emotion category.

For example, for the given user emotion category, a first intensity level and a second intensity level may be specified. The first intensity level may correspond to low intensity and the second intensity level may correspond to high intensity. Then, based on the user data, a number of the previous interactive sessions corresponding to the first intensity level and a number of the previous interactive sessions corresponding to the second intensity level can be detected. In a simplest case, the intensity rating associated with the given user emotion category in the notification data can be set according to the intensity level having the greatest number of the previous interactive sessions (e.g. if the first intensity level has the greatest number of sessions then the intensity rating is set according to the first intensity level).

Alternatively, in some cases even in the case of having just a first intensity level and a second intensity level for a given user emotion category, a relative distribution of the number of sessions corresponding to the first intensity level and a number of the sessions corresponding to the second intensity level may be used to calculate the emotion intensity rating. Taking an example in which there are 100 previous sessions including the correspondence between the set of in-game properties and the same emotion category, if 90 of the sessions correspond to the second intensity level and 10 of the sessions correspond to the first intensity level, this is indicative of a higher intensity compared to a case in which 60 of the sessions correspond to the second intensity level and 40 of the sessions correspond to the first intensity level. Consequently, in some examples, the analysis circuitry is configured to calculate a value of the emotion intensity rating in dependence upon a number of the previous interactive sessions corresponding to each of a plurality of respective different intensity levels for the given user emotion category. It will be appreciated that the above examples refer to using two intensity levels, however the number of intensity levels is not particularly limited and may take any suitable value.

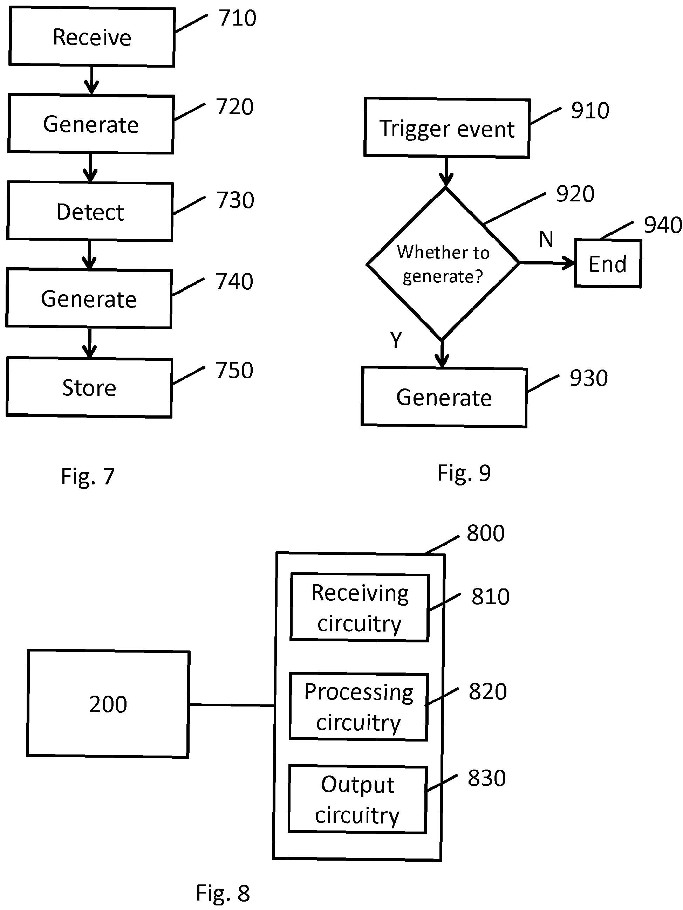

Figure 7 is a schematic flowchart illustrating a computer implemented method in accordance with embodiments of the disclosure. The method comprises:
receiving (at a step 710) game state information and associated user data for a plurality of previous interactive sessions of an interactive gaming application, the plurality of previous interactive sessions being associated with a plurality of users,
wherein for each previous interactive session, the user data is indicative of one or more properties for a given user during the previous interactive session and the game state information is indicative of one or more in-game properties during the previous interactive session;
generating (at a step 720) user emotion data indicating one or more user emotion categories in dependence upon the user data for the plurality of previous interactive sessions;
detecting (at a step 730) a correspondence between a set of one or more in-game properties and a given user emotion category for at least a threshold number of interactive sessions; and
generating (at a step 740) a notification element comprising notification data indicative of the set of one or more in-game properties; and
storing (at a step 750) the notification element.

### Systems

The above techniques refer to the data processing apparatus 200 generating and storing one or more notification elements as well as possibilities for the notification data.

The following describes systems in which a game processing device, which may be an entertainment device or a game server, for example, receives one or more notification elements from the data processing apparatus 200. In the following discussion, the notification element can take any of the forms discussed previously.

Referring now to Figure 8, in some embodiments of the disclosure a system comprises:
the data processing apparatus 200; and
a processing device 800 for executing an interactive session of the interactive gaming application,
wherein the data processing apparatus comprises output circuitry to output the notification element to the processing device 800,
wherein the processing device 800 comprises:
   receiving circuitry 810 to receive the notification element;
   processing circuitry 820 to execute a current interactive session of the interactive gaming application and generate one or more notifications in dependence upon the notification element; and
   output circuitry 830 to output one or more of the notifications to a current user associated with the processing device.

In Figure 8, the data processing apparatus 200 is shown as communicating data to the device 800 and any suitable wired or wireless communication protocol may be used.

In some embodiments of the disclosure, the processing device 800 may be a client device such as 101-1, 101-2, 101-n described previously with respect to Figure 3, and may specifically be an entertainment device such as that described in the example of Figure 1.

The processing device 800 is operable to receive one or more notification elements from the data processing apparatus 200, e.g. via the network 100, and may receive the notification element(s) prior to a current user starting an interactive session for the interactive gaming application.

The processing device 800 is operable to execute the current session of the interactive gaming application and generate one or more notifications in dependence upon the received notification element(s). As explained previously, in some cases one or more notifications may be generated for output to the current user prior to starting a new session or at the beginning of the new session. For example, an initial notification image may be generated by the device 800 for display to a user to notify the user one or more in-game properties for which previous users experienced negative emotions.

In some embodiments of the disclosure, the processing circuitry is configured to generate one or more notifications in dependence upon the notification element for output to the current user during the current session of the interactive gaming application.

In some embodiments of the disclosure, the processing circuitry is configured to generate one or more of the notifications in advance of the current interactive session corresponding to the set of one or more in-game properties. As the current user progresses the video game though user inputs, the current game state for the current session changes over time. For example, the user may control an in-game character to move through a virtual game world and encounter different in-game objects, sounds, events, and scenes which can be reflected in the game state. The processing circuitry can be configured to generate one or more of the notifications for output to the current user to notify the current user at a time prior to encountering the set of one or more in-game properties associated with the notification element.

In some embodiments of the disclosure, the processing circuitry 820 is configured to execute a current interactive session of the interactive gaming application and to generate one or more notifications in dependence upon a notification element, in which the processing circuitry 820 is configured to generate one or more of the notifications in response to a trigger event indicative of the current interactive session being expected to correspond to the set of one or more in-game properties indicated by the notification element.

In a simplest case, when a notification element comprises notification data indicative of an in-game location, a comparison of the in-game location with a current in-game location (or more generally current game state) can be used to determine whether to generate one or more notifications using the notification element. In particular, the processing circuitry can be configured to determine whether a difference between an in-game location for a notification element and a current in-game location for the current session is less than a threshold value and use this determination for triggering processing for generating one or more notifications using the notification element. In this way, in response to determining that the difference between the two in-game locations is less than the threshold value, the processing circuitry can be configured to generate one or more of the notifications for output to the current user. The current user can thus be provided with one or more of an image notification, audio notification and haptic notification having the properties discussed previously. The current user can thus be notified and at least one of a likelihood of experiencing a negative user emotion and an intensity of the negative user emotion can potentially be reduced for the current user.

Alternatively or in addition to using comparison of two in-game locations, the processing circuitry may in some cases use a comparison of two in-game times. For example, some video games may have an internal game time measured in units that are relative to real-world time or a clock indicating a time associated with a challenge. In the case in which notification element comprises notification data indicative of an in-game time (e.g. possibly because a certain in-game event occurs at the in-game time), a comparison of the in-game time and a current in-game time (or more generally current game state) can be used. In particular, the processing circuitry can detect when a difference between the in-game time and the current in-game time is less than a threshold value for triggering processing for generating one or more notifications using the notification element.

Alternatively or in addition, in some examples in which a respective notification element is indicative of a set comprising a number of in-game properties, a comparison of the set of in-game properties with the current game state (or at least some of the current in-game properties indicated by the current game state) may be used for triggering processing for generating one or more notifications using the notification element. For example, for a set comprising X respective in-game properties (where X is three or more), the processing circuitry can be configured to determine whether a threshold number of the X respective in-game properties are currently present in the current game state for the current session, and if so generate one or more notifications using the notification element. For example, the threshold number may be set to be X-1. This may be particularly useful for reliably determining in advance that the current interactive session is expected to correspond to the set of in-game properties indicated by the notification element.

Alternatively or in addition, in some examples the notification element may comprise notification data indicative of the set of one or more in-game properties and also a plurality of in-game properties for a given time period immediately preceding the set of one or more in-game properties. For example, using the techniques discussed above with respect to the analysis circuitry, in response to detecting that a set of one or more in-game properties corresponds to a given user emotion category for at least a threshold number of interactive sessions, the analysis circuitry can generate the notification data to indicate the set of one or more in-game properties as well as indicating a plurality of in-game properties for a given time period immediately prior to the detected set. Therefore, plurality of in-game properties for the given time period can be used for comparison with the current game state data for determining in advance that the user is expected to encounter a game state corresponding to the set of in-game properties indicated by the notification element.

Alternatively or in addition, the processing device 800 may comprise one or more trained machine learning model trained for the interactive gaming application to predict one or more game states for a session in dependence upon a current game state. The machine learning model can be trained using any commonly known techniques to receive an input comprising a current game state and output one or more predicted game states. For example, supervised training and or reinforcement learning techniques may be used for this purpose. Predicted game states can thus be obtained and compared with the set of one or more in-game properties and, in response to each of the set of one or more in-game properties being present in the predicted game state, the processing circuitry can generate one or more notifications using the notification element. Hence more generally, in some examples a trigger event for a notification element may be determined by at least one trained machine learning model predicting a game state including at least each of the one or more in-game properties for a notification element.

### User Model

The following describes techniques in which a user model characterising behavioural properties for a current user can be used. The user model characterising behavioural properties for a current user is used to determine whether to generate one or more of the notifications for output to the current user.

As explained previously, the processing device 800 can receive notification elements which each indicate a set of one or more in-game properties identified as being related to a given user emotion category for a threshold number of sessions. The notification elements can thus indicate in-game properties that are, in general, likely to have a similar effect on the emotional state of the current user. However, different users have different preferences and characteristics and what may cause a negative emotion for some users may not for others.

In some embodiments of the disclosure, the processing device 800 comprises modelling circuitry to store a user model characterising previous behavioural properties for the current user associated with the processing device, and wherein in response to a trigger event indicative of the current interactive session being expected to correspond to the set of one or more in-game properties, the processing circuitry is configured to determine whether to generate one or more of the notifications in dependence upon the notification element and the user model. Therefore, whilst a trigger event for triggering generating and outputting a notification to the current user may be satisfied for a given notification element, in some embodiments a further step is involved which uses the user model and the given notification element to determine whether the given notification element is appropriate for the current user based on their previous behavioural properties.

In particular, the user model may indicate that the current user has a tendency to have a stronger negative emotional response to an in-game property when comparing the current user to a corpus of other users that have reacted to the same in-game property. Conversely, the user model may indicate that the current user generally exhibits little or no negative emotional response to such an in-game property compared to the corpus. More generally, the user model can provide an indication of a user's propensity for a given user emotion, such as a propensity to become stressed, angry, frustrated or fearful.

The user model can generally indicate previous behavioural properties for the current user and can be used to predict a likelihood of the current user having a type of emotional response for an in-game property. In some examples, one or more trained machine learning models may be used to predict for a user a likelihood of that user having a type of emotional response for an in-game property.

In response to a trigger event for a given notification element, the processing circuitry 800 can be configured to predict a likelihood of the current user having a type of emotional response for the set of one or more in-game properties for the notification element, and determine whether to generate one or more notifications for the notification element. For example, the predicted likelihood of the current user having a stress type of emotional response for the set of one or more in-game properties can be compared to a predetermined value and when greater than or equal to the predetermined value, one or more of the notifications can be generated for output to the user.

Hence more generally, the user model can be used so that the data processing apparatus can, in response to a trigger event for a given notification element, selectively generate one or more of the notifications depending on the user model so as to generate notifications when the user is likely to have an emotional response (e.g. a negative emotional response such as stress, anger, fear or frustration) and not generate notifications when the user is not likely to have an emotional response (or to have a relatively weak emotional response).

### Current User Data

The following describes techniques in which current user data indicative of one or more current properties for the current user can be used to selectively generate one or more notifications in response to a trigger event.

In some embodiments of the disclosure, in response to a trigger event indicative of the current interactive session being expected to correspond to the set of one or more in-game properties, the processing circuitry is configured to determine whether to generate one or more of the notifications in dependence upon the notification element and current user data indicative of one or more current properties for the current user during the current interactive session of the interactive gaming application.

The current user data may indicate any of the previously mentioned user properties. Using the current user data, the processing device 800 can determine a current user emotion category for the current user based on the current user data (e.g. one or more of user input data and user biometric data). In response to a trigger event, the processing device 900 can selectively generate the one or more notifications based on the current user emotion category. For example, if the current user emotion category already relates to a negative type of user emotion, then the device 800 can select to generate one or more of the notifications. Otherwise, the device 800 may select not to generate one or more of the notifications. In this way, one or more notification(s) can be provided to a user already experiencing one or more negative user emotions (e.g. stress, anxiousness, fear, anger and so on).

Alternatively or in addition, for example, if the current user emotion category relates to a neutral type of user emotion, then the device 800 can also select to generate one or more of the notifications. Alternatively or in addition, for example, if the current user emotion category relates to a positive type of user emotion (e.g. joy), then the device 800 may select not to generate one or more of the notifications. Of course, the current user data may be used in a number of other suitable ways to determine whether to generate one or more of the notifications in dependence upon the notification element and current user data in a manner that provides notifications appropriately for the user's current emotions.

More generally, Figure 9 is a schematic flowchart illustrating a computer implemented method in accordance with some embodiments of the disclosure. The method comprises:
detecting (at a step 910) an occurrence of a trigger event in respect of a notification element;
determining (at a step 920) whether to generate one or more notifications for the notification element; and
generating (at a step 930) one or more of the notifications for output to a user.

If at the step 920 the method determines not to generate one or more notifications, then the method ends at step 940. The determining at the step 920 may, for example, use either the user model or the current user data as discussed above to determine whether to generate a notification for output to the current user.

### Game Parameter Modification

In some embodiments of the disclosure, processing circuitry 820 is configured to modify at least one parameter related to the execution of the current interactive session in dependence upon the notification element.

The notification element is indicative of a set of one or more in-game properties, as discussed above. Prior to the processing device 800 executing the current session and/or during the execution of the current session, a parameter associated with the current session may be modified depending on the notification element. For example, a parameter related to one of the in-game properties indicated by the notification element may be modified. Therefore, as well as providing a notification to the current user, the notification element can be used by the processing device 800 to modify an aspect associated with the current interactive session.

For example, a parameter associated with an audio property for the current session may be modified to reduce a loudness associated with one or more in-game sounds. Alternatively or in addition, a parameter defining (and/or associated with) a gore level for a session may be provided for some interactive gaming applications. In some examples, the processing device 800 can be configured to modify a parameter associated with a gore level to reduce a level of gore. Other possible parameter modifications may relate to slowing a speed of game play and/or reducing a number of enemy characters and/or reducing sound effects associated with enemy characters. Other possibilities may also be considered.

For example, in response to receiving at least one notification element in respect of the interactive gaming application (which can indicate that a threshold number of previous interaction sessions have resulted in users experiencing a negative user emotion for at least a segment of their session of the application) one or more parameter modifications can be performed to provide mitigation. Alternatively, a threshold condition such as receiving a predetermined number of notification elements each specifying a different set of one or more in-game properties may be used so that in response to the number of received notification elements being equal to or greater than the predetermined number, one or more parameter modifications for mitigation of negative user emotion(s) can be performed.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.

The present disclosure may be implemented in accordance with any of the following numbered clauses:
Clause 1. A data processing apparatus comprising:
   receiving circuitry to receive game state information and associated user data for a plurality of previous interactive sessions of an interactive gaming application, the plurality of previous interactive sessions associated with a plurality of users,
   wherein for each previous interactive session, the user data is indicative of one or more properties for a given user during the previous interactive session and the game state information is indicative of one or more in-game properties during the previous interactive session;
   analysis circuitry to:
      generate user emotion data indicative of one or more user emotion categories in dependence upon the user data for the plurality of previous interactive sessions;
      detect a correspondence between a set of one or more in-game properties and a given user emotion category for at least a threshold number of interactive sessions; and
      generate a notification element comprising notification data indicative of the set of one or more in-game properties; and
      storage circuitry to store the notification element.
Clause 2. The data processing apparatus according to clause 1, wherein the set comprises a plurality of in-game properties.
Clause 3. The data processing apparatus according to clause 1 or clause 2, wherein the notification data comprises data for generating one or more from the list consisting of:
   an image notification;
   an audio notification; and
   a haptic notification.
Clause 4. The data processing apparatus according to any preceding clause, wherein the notification data comprises one of:
   data indicative of the given user emotion category; and
   data indicative of the given user emotion category and an emotion intensity rating associated with the given user emotion category.
Clause 5. The data processing apparatus according to any preceding clause, wherein the user data for at least some of the previous interactive sessions comprises at least one of user input data associated with a user input device and user biometric data associated with one or more sensors for monitoring one or more physical user properties.
Clause 6. The data processing apparatus according to clause 5, wherein the user input data comprises one or more from the listing consisting of:
   button press data associated with the user input device;
   control stick data associated with the user input device;
   position data associated with the user input device; and
   orientation data associated with the user input device.
Clause 7. The data processing apparatus according to clause 5 or clause 6, wherein the user biometric data is indicative of one or more from the list consisting of:
   galvanic skin response;
   body temperature;
   heart rate;
   breathing rate;
   eye blink rate;
   metabolic rate;
   one or more properties of a face of the given user;
   one or more properties of a body pose of the given user;
   one or more properties of speech associated with the given user;
   gaze direction; and
   pupil dilation.
Clause 8. The data processing apparatus according to any preceding clause, wherein the analysis circuitry is configured to:
   detect, for a previous interactive session of the plurality of previous interactive sessions, a respective set of one or more in-game properties associated with at least one temporal segment of the previous interactive session that has been associated with a given user emotion category; and
   generate count information indicative of a total number of the plurality of previous interactive sessions for which the respective set of one or more in-game properties is detected to be associated with the given user emotion category.
Clause 9. The data processing apparatus according to clause 4, wherein for the correspondence between the set of one or more in-game properties and the given user emotion category, the analysis circuitry is configured to detect a number of the previous interactive sessions corresponding to two or more respective different intensity levels for the given user emotion category, and the storage circuitry is configured to store the notification element to comprise the notification data indicative of the given user emotion category and the emotion intensity rating associated with the given user emotion category, the emotion intensity rating being dependent upon the number of the previous interactive sessions corresponding to the two or more respective different intensity levels for the given user emotion category.
Clause 10. The data processing apparatus according to any preceding clause, wherein the one or more user emotion categories each correspond to a different negative user emotion.
Clause 11. The data processing apparatus according to any preceding clause, wherein the one or more user emotion categories comprise one or more from the list consisting of: a fear category; an anger category; a frustration category and a stress category.
Clause 12. The data processing apparatus according to any preceding clause, wherein the set of one or more in-game properties comprises one or more from the list consisting of:
   an in-game scene;
   an in-game location;
   an in-game object;
   an in-game sound;
   an in-game time; and
   an in-game event.
Clause 13. A system comprising:
   the data processing apparatus according to any preceding clause; and
   a processing device for executing an interactive session of the interactive gaming application,
   wherein the data processing apparatus comprises output circuitry to output the notification element to the processing device,
   wherein the processing device comprises:
      receiving circuitry to receive the notification element;
      processing circuitry to execute a current interactive session of the interactive gaming application and to generate one or more notifications in dependence upon the notification element; and
      output circuitry to output one or more of the notifications to a current user associated with the processing device.
Clause 14. The system according to clause 13, wherein the processing circuitry is configured to generate one or more of the notifications in response to a trigger event indicative of the current interactive session being expected to correspond to the set of one or more in-game properties.
Clause 15. The system according to clause 13 or clause 14, wherein the processing device comprises modelling circuitry to store a user model characterising previous behavioural properties for the current user associated with the processing device, and wherein in response to a trigger event indicative of the current interactive session being expected to correspond to the set of one or more in-game properties, the processing circuitry is configured to determine whether to generate one or more of the notifications in dependence upon the notification element and the user model.
Clause 16. The system according to clause 13 or clause 14, wherein in response to a trigger event indicative of the current interactive session being expected to correspond to the set of one or more in-game properties, the processing circuitry is configured to determine whether to generate one or more of the notifications in dependence upon the notification element and current user data indicative of one or more current properties for the current user during the current interactive session of the interactive gaming application.
Clause 17. The system according to any one of clauses 13 to 16, wherein the processing circuitry is configured to modify at least one parameter related to the execution of the current interactive session in dependence upon the notification element.
Clause 18. A computer-implemented method comprising:
   receiving game state information and associated user data for a plurality of previous interactive sessions of an interactive gaming application, the plurality of previous interactive sessions being associated with a plurality of users,
   wherein for each previous interactive session, the user data is indicative of one or more properties for a given user during the previous interactive session and the game state information is indicative of one or more in-game properties during the previous interactive session;
   generating user emotion data indicating one or more user emotion categories in dependence upon the user data for the plurality of previous interactive sessions;
   detecting a correspondence between a set of one or more in-game properties and a given user emotion category for at least a threshold number of interactive sessions;
   generating a notification element comprising notification data indicative of the set of one or more in-game properties; and
   storing the notification element.
Clause 19. Computer software which, when executed by a computer, causes the computer to carry out the method of clause 18.

## Claims

1. A data processing apparatus comprising:
receiving circuitry to receive game state information and associated user data for a plurality of previous interactive sessions of an interactive gaming application, the plurality of previous interactive sessions associated with a plurality of users,
wherein for each previous interactive session, the user data is indicative of one or more properties for a given user during the previous interactive session and the game state information is indicative of one or more in-game properties during the previous interactive session;
analysis circuitry to:
generate user emotion data indicative of one or more user emotion categories in dependence upon the user data for the plurality of previous interactive sessions;
detect a correspondence between a set of one or more in-game properties and a given user emotion category for at least a threshold number of interactive sessions; and
generate a notification element comprising notification data indicative of the set of one or more in-game properties; and
storage circuitry to store the notification element.

2. The data processing apparatus according to claim 1, wherein the set comprises a plurality of in-game properties.

3. The data processing apparatus according to claim 1 or claim 2, wherein the notification data comprises data for generating one or more from the list consisting of:
an image notification;
an audio notification; and
a haptic notification.

4. The data processing apparatus according to any preceding claim, wherein the notification data comprises one of:
data indicative of the given user emotion category; and
data indicative of the given user emotion category and an emotion intensity rating associated with the given user emotion category.

5. The data processing apparatus according to any preceding claim, wherein the user data for at least some of the previous interactive sessions comprises at least one of user input data associated with a user input device and user biometric data associated with one or more sensors for monitoring one or more physical user properties.

6. The data processing apparatus according to claim 5, wherein the user input data comprises one or more from the listing consisting of:
button press data associated with the user input device;
control stick data associated with the user input device;
position data associated with the user input device; and
orientation data associated with the user input device, and wherein the user biometric data is indicative of one or more from the list consisting of:
galvanic skin response;
body temperature;
heart rate;
breathing rate;
eye blink rate;
metabolic rate;
one or more properties of a face of the given user;
one or more properties of a body pose of the given user;
one or more properties of speech associated with the given user;
gaze direction; and
pupil dilation.

7. The data processing apparatus according to any preceding claim, wherein the analysis circuitry is configured to:
detect, for a previous interactive session of the plurality of previous interactive sessions, a respective set of one or more in-game properties associated with at least one temporal segment of the previous interactive session that has been associated with a given user emotion category; and
generate count information indicative of a total number of the plurality of previous interactive sessions for which the respective set of one or more in-game properties is detected to be associated with the given user emotion category.

8. The data processing apparatus according to claim 4, wherein for the correspondence between the set of one or more in-game properties and the given user emotion category, the analysis circuitry is configured to detect a number of the previous interactive sessions corresponding to two or more respective different intensity levels for the given user emotion category, and the storage circuitry is configured to store the notification element to comprise the notification data indicative of the given user emotion category and the emotion intensity rating associated with the given user emotion category, the emotion intensity rating being dependent upon the number of the previous interactive sessions corresponding to the two or more respective different intensity levels for the given user emotion category.

9. The data processing apparatus according to any preceding claim, wherein the one or more user emotion categories each correspond to a different negative user emotion.

10. The data processing apparatus according to any preceding claim, wherein the one or more user emotion categories comprise one or more from the list consisting of: a fear category; an anger category; a frustration category and a stress category.

11. A system comprising:
the data processing apparatus according to any preceding claim; and
a processing device for executing an interactive session of the interactive gaming application,
wherein the data processing apparatus comprises output circuitry to output the notification element to the processing device,
wherein the processing device comprises:
receiving circuitry to receive the notification element;
processing circuitry to execute a current interactive session of the interactive gaming application and to generate one or more notifications in dependence upon the notification element; and
output circuitry to output one or more of the notifications to a current user associated with the processing device.

12. The system according to claim 11, wherein the processing circuitry is configured to generate one or more of the notifications in response to a trigger event indicative of the current interactive session being expected to correspond to the set of one or more in-game properties.

13. The system according to claim 11 or claim 12, wherein in response to a trigger event indicative of the current interactive session being expected to correspond to the set of one or more in-game properties, the processing circuitry is configured to determine whether to generate one or more of the notifications in dependence upon the notification element and current user data indicative of one or more current properties for the current user during the current interactive session of the interactive gaming application; or wherein the processing device comprises modelling circuitry to store a user model characterising previous behavioural properties for the current user associated with the processing device, and wherein in response to a trigger event indicative of the current interactive session being expected to correspond to the set of one or more in-game properties, the processing circuitry is configured to determine whether to generate one or more of the notifications in dependence upon the notification element and the user model.

14. A computer-implemented method comprising:
receiving game state information and associated user data for a plurality of previous interactive sessions of an interactive gaming application, the plurality of previous interactive sessions being associated with a plurality of users,
wherein for each previous interactive session, the user data is indicative of one or more properties for a given user during the previous interactive session and the game state information is indicative of one or more in-game properties during the previous interactive session;
generating user emotion data indicating one or more user emotion categories in dependence upon the user data for the plurality of previous interactive sessions;
detecting a correspondence between a set of one or more in-game properties and a given user emotion category for at least a threshold number of interactive sessions;
generating a notification element comprising notification data indicative of the set of one or more in-game properties; and
storing the notification element.

15. Computer software which, when executed by a computer, causes the computer to carry out the method of claim 14.
